# EUROPEAN PATENT APPLICATION

(11) **EP 3 708 355 A1**
(43) Date of publication of application: **16.09.2020**
(21) Application number: 19216552.0
(22) Date of filing: 16.12.2019
(51) Int. Cl.: B32B 3/12, B32B 3/08, B32B 3/26, B32B 5/02, B32B 7/12, B32B 9/00, B32B 15/04, B32B 27/06, E04B 1/84, F01N 1/02, F02K 1/82, G10K 11/172

(54) **ACOUSTIC PANEL**

(30) Priority: 11.03.2019 US 201916298717
(71) Applicant: Rohr, Inc., Chula Vista, CA 91910-2098 (US)
(72) Inventor: SCAMARDO, Michael, Rancho Cucamonga, CA California 91701 (US); WEAVER, Luby, Redlands, CA California 92373 (US); ALVERO III, Aurelio, Whittier, CA California 90604 (US)
(74) Representative: Dehns

(57) **Abstract**

An acoustic panel is disclosed. In various embodiments, the acoustic panel includes a first layer; a cell having a first cell end connected to the first layer and a second cell end spaced a cell length from the first cell end, the cell having a first wall extending between the first cell end and the second cell end; and a septum having a central portion positioned within the cell and a first tab extending from the central portion, the first tab defining a first surface positioned against the first wall and a first distal end positioned adjacent the first layer.

## Description

### FIELD

The present disclosure relates generally to structural noise suppression systems and, more particularly, to acoustic panels used to suppress noise in aircraft gas turbine engine systems.

### BACKGROUND

Acoustic panels may be used for noise suppression in aerospace applications and other fields. The panels typically comprise two skin surfaces that sandwich between them at least one layer of a core material or structure. The two skins and the core structure may be bonded together or cured or otherwise formed together, but mechanical fastening is also used in some applications. The core structure ties the skins together structurally and can form a very rigid, efficient and lightweight structure for noise suppression useful in aerospace applications. The panels may be given acoustic properties by perforating one skin (typically an air washed side of the panel) with specifically sized holes. This enables the cells of the core structure to act like individual Helmholtz resonators that attenuate a certain tone or tones, at specific frequencies or wavelengths, of noise generated by an engine. Further, additional layers of core structure, separated by additional skins, sheets or septa, may be used to attenuate multiple tonal frequencies. In many applications, the acoustic sandwich panel serves a structural role in addition to an acoustic role, but in some applications the structural function may be secondary to the acoustics. In aerospace applications, nacelles that house turbofan gas turbine engines may use acoustic panels to form the inner barrel of the inlet, the inner fixed structure of a thrust reverser, the translating sleeve of a translating sleeve type thrust reverser or portions of an exhaust system.

### SUMMARY

An acoustic panel is disclosed. In various embodiments, the acoustic panel includes a first layer; a cell having a first cell end connected to the first layer and a second cell end spaced a cell length from the first cell end, the cell having a first wall extending between the first cell end and the second cell end; and a septum having a central portion positioned within the cell and a first tab extending from the central portion, the first tab defining a first surface positioned against the first wall and a first distal end positioned adjacent the first layer.

In various embodiments, the cell includes a second wall extending between the first cell end and the second cell end and the septum includes a second tab extending from the central portion. In various embodiments, the second tab includes a second surface positioned against the second wall. In various embodiments, the second tab includes a second distal end positioned adjacent the first layer. In various embodiments, the first distal end of the first tab and the second distal end of the second tab are secured to the first layer by an adhesive. In various embodiments, the first tab is secured to the first wall by a first weld and the second tab is secured to the second wall by a second weld. In various embodiments, the septum comprises a mesh and, in various embodiments, the mesh comprises stainless steel.

In various embodiments, the first tab defines a first proximal end connected to the central portion and a first tab length extending from the first proximal end to the first distal end. In various embodiments, the first tab length is between about twenty-five percent and about seventy-five percent of the cell length. In various embodiments, the cell defines a cell cross-sectional shape in a form of a polygon. In various embodiments, the polygon is one of a triangle, a square and a hexagon.

In various embodiments, the cell includes a second wall extending between the first cell end and the second cell end and the septum includes a second tab extending from the central portion. In various embodiments, the second tab defines a second proximal end connected to the central portion, a second distal end positioned adjacent the first layer, and a second tab length extending from the second proximal end to the second distal end, the second tab length equal to the first tab length. In various embodiments, the first distal end of the first tab and the second distal end of the second tab are secured to the first layer by an adhesive. In various embodiments, the first tab is secured to the first wall by a first weld and the second tab is secured to the second wall by a second weld.

A septum for an acoustic panel is disclosed. In various embodiments, the septum includes a central portion configured for positioning within a cell; a first tab extending from the central portion, the first tab defining a first surface configured for positioning against a first wall of the cell and a first distal end configured for positioning adjacent a first layer of the acoustic panel; and a second tab extending from the central portion, the second tab defining a second surface configured for positioning against a second wall of the cell and a second distal end configured for positioning adjacent the first layer of the acoustic panel. In various embodiments, the cell defines a cell cross-sectional shape in a form of one of a triangle, a square and a hexagon.

A method of fabricating an acoustic panel is disclosed. In various embodiments, the method includes the steps of providing a core structure having a cell, the cell having a first cell end and a second cell end spaced from the first cell end; inserting a septum into the cell, the septum having a central portion configured for positioning within the cell, a first tab extending from the central portion, and a second tab extending from the central portion; positioning the first tab against a first wall of the cell and a first distal end of the first tab adjacent the first cell end of the cell; positioning the second tab against a second wall of the cell and a second distal end of the second tab adjacent the first cell end of the cell; and adhering one of a back-skin and a perforated layer to the first distal end of the first tab, the second distal end of the second tab, the first wall proximate the first cell end of the cell and the second wall proximate the first cell end of the cell. In various embodiments, the method further includes the step of welding the first tab to the first wall and the second tab to the second wall.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 is a partial sectional view of an acoustic structure located near a noise source, in accordance with various embodiments;
FIG. 2 is a perspective view, partially cutaway, of a dual degree of freedom (DDOF) acoustic structure, in accordance with various embodiments;
FIG. 3 is a perspective view, partially cutaway, of a single degree of freedom (SDOF) acoustic structure, in accordance with various embodiments;
FIGS. 4A, 4B, 4C and 4D illustrate an acoustic panel and details of a septum configured for mounting within a cell of the acoustic panel, in accordance with various embodiments;
FIGS. 5A, 5B, 5C and 5D illustrate various processes for fabricating an acoustic panel, in accordance with various embodiments; and
FIG. 6 illustrates method of fabricating an acoustic panel, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

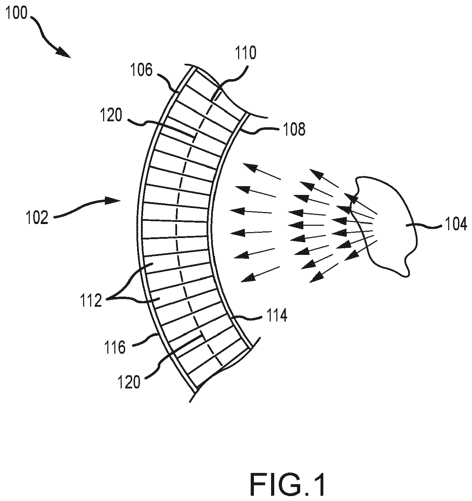

Referring to FIG. 1, a partial sectional view of a noise suppression system 100 is illustrated. The noise suppression system 100 includes an acoustic panel 102 configured for positioning proximate a noise source 104. The acoustic panel 102 includes an outer layer 106, an inner layer 108 and a core structure 110 sandwiched therebetween. In various embodiments, the outer layer 106 is a solid layer and the inner layer 108 is a perforated layer. The core structure 110 typically includes a plurality of cells 112 extending between the outer layer 106 and the inner layer 108. Each of the plurality of cells 112 of the core structure 110 forms a hollow cavity that acts as a Helmholtz resonator to attenuate noise. Accordingly, noise generated by the noise source 104 enters the core structure 110 through the inner layer 108 and is attenuated. The noise source 104 may be, for example, a gas turbine engine for an aircraft and the acoustic panel 102 may be a portion of a nacelle that surrounds the engine or an inlet to the engine. Although the acoustic panel 102, as illustrated, is positioned radially outward of the noise source 104 and extends a circumferential arc length from one end to the other, the acoustic panel 102 is not limited to the arc length shown. For example, the acoustic panel 102 may form a cylindrical shape that surrounds the noise source 104. The acoustic panel 102 illustrated in FIG. 1 shares certain characteristics of a single degree of freedom (SDOF) structure. The basic configuration of a SDOF structure comprises the inner layer 108, also referred to as a perforated layer 114, the outer layer 106, also referred to as a back-skin 116, and the core structure 110 sandwiched therebetween, where the core structure 110 comprises the plurality of cells 112 extending between the inner layer 108 and the outer layer 106. However, as described more fully below, in various embodiments, the acoustic panel 102 may include a septum 120 disposed within each of the plurality of cells 112, which provides the acoustic panel 102 with certain characteristics of a dual (or double) degree of freedom (DDOF) structure.

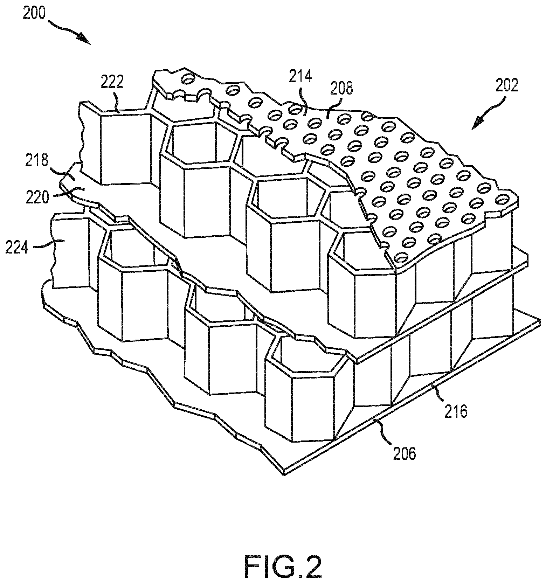

Referring now to FIG. 2, a partially cutaway perspective view of a noise suppression system 200 is illustrated. In contrast to the noise suppression system 100 described above with reference to FIG. 1, exhibiting a SDOF-like structure, the noise suppression system 200 exhibits a dual (or double) degree of freedom (DDOF) structure. The noise suppression system 200 includes an acoustic panel 202 having an outer layer 206 (also referred to as a back-skin 216) and an inner layer 208 (also referred to as a perforated layer 214). In various embodiments, the inner layer 208 is perforated and the outer layer 206 is solid. Between the inner layer 208 and the outer layer 206 is a middle layer 218 (also referred to as a septum 220) In various embodiments, the middle layer 218 is solid, while in other embodiments, the middle layer 218 is porous or perforated. Disposed between the inner layer 208 and the middle layer 218 is a first core structure 222. Disposed between the middle layer 218 and the outer layer 206 is a second core structure 224. Similar to the core structure 110 described above, cross-sections of the first core structure 222 and the second core structure 224 may exhibit various structural shapes, such as, for example, square or hexagonal or, in general, n-polygonal (where n is the number of sides of the polygon). In various embodiments, the first core structure 222 and the second core structure 224 both have a honeycomb structure. In various embodiments, the cross-sections of the first core structure 222 and the second core structure 224 comprise tessellated hexagons, as illustrated in FIG. 2. In various embodiments, the cross-sections of the first core structure 222 and the second core structure 224 comprise quadrilateral or square tessellations or combinations thereof, including other polygonal or circular shapes.

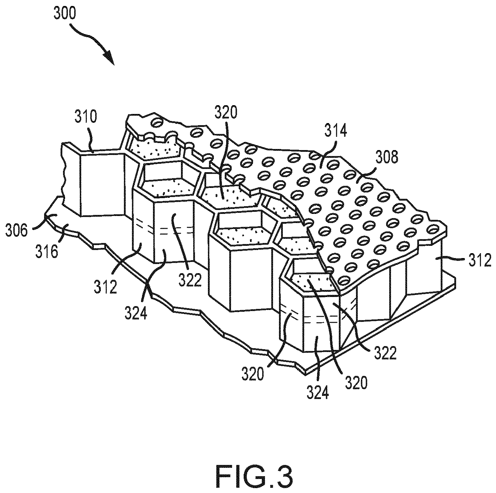

Referring now to FIG. 3, a partially cutaway perspective view of a noise suppression system 300 is illustrated. The noise suppression system 300 is a DDOF system, exhibiting features from both a SDOF system (*e.g.,* a noise suppression system similar to the noise suppression system 100 described above, but without the septum 120 disposed within each of the plurality of cells 112) and a DDOF system (*e.g.,* the noise suppression system 200 described above). Whereas the noise suppression system 200 described above with reference to FIG. 2 includes the first core structure 222 and the second core structure 224 separated by the middle layer 218, the noise suppression system 300 illustrated in FIG. 3 includes a core structure 310 similar to the core structure 110 described above with reference to FIG. 1 (*e.g.,* the noise suppression system 100, including the septum 120 disposed within each of the plurality of cells 112). The core structure 310 includes a plurality of cells 312. Each of the plurality of cells 312 is separated into two cells by a septum 320 disposed between the ends of each cell (*e.g.,* the septum 320 may be disposed midway between the axial ends defining the cell, between an outer layer 306 and an inner layer 308). Accordingly, in various embodiments, the noise suppression system 300 may exhibit the noise suppression characteristics of a DDOF system, but with the smaller size and simpler construction of a SDOF system.

Referring still to FIG. 3, the noise suppression system 300 includes an acoustic panel 302 having the outer layer 306 (also referred to as a back-skin 316), the inner layer 308 (also referred to as a perforated layer 314) and the core structure 310. The septum 320 disposed within each of the plurality of cells 312 may exhibit the same cross sectional shape as does the corresponding cell and serves to divide each cell into an inner cell 322 proximate the inner layer 308 and an outer cell 324 proximate the outer layer 306. In various embodiments, each septum 320 may be held in place by an adhesive, a weld or by friction. The adhesive, for example, adheres one or more portions of the septum to one or more walls of each cell, while the weld may be a spot weld or tack weld between one or more of the surfaces of the septum and the one or more walls of each cell. When secured in place, the septum 320 substantially seals the inner cell 322 apart from the outer cell 324 around a periphery of the septum 320.

In various embodiments, the outer layer 306 may be formed from any suitable material, including, for example, metals, such as titanium or aluminum, plastics, such as phenolics, and composites, such as fiber reinforced composites. The inner layer 308 may be formed of similar materials. In various embodiments, the inner layer 308 and the outer layer 306 are formed of the same material, while in other embodiments, the inner layer 308 and the outer layer 306 are formed of different materials. In various embodiments, the outer layer 306 is impervious to airflow and the inner layer 308 is perforated. The size, number and spacing of perforations may depend on the acoustic requirements. For example, in various embodiments, the perforations are between about 0.030 inches (≈ 0.76 mm) and about 0.100 inches (≈ 2.54 mm) in diameter. In various embodiments, the perforations provide about 15% to about 35% open area and may be arranged in a uniform pattern across the inner layer 308.

The core structure 310 may be formed of any suitable material including, for example, metals, such as titanium, aluminum and alloys thereof, or ceramics and composite materials. In various embodiments, the core structure 310 is a honeycomb structure comprising tessellated polygons, such as, for example, squares or hexagons. In various embodiments, for example, including the embodiment illustrated in FIG. 3, the core structure 310 may exhibit hexagons spaced in a regular pattern. In other embodiments, the hexagons are irregular. The cross sectional shape of the core structure 310 may also exhibit other shapes, including, for example, parallelograms, rectangles, squares or general n-polygons. Further, in various embodiments, the cross-sectional shape of the core structure 310 may include more than one different shape, such as, for example, a combination of triangles and squares.

Each septum 320 may be formed of any suitable material. Such materials are typically provided as relatively thin sheets that are perforated, porous or an open mesh fabric designed to provide noise attenuation. Each septum 320, for example, may be formed of a perforated or porous sheet of metal, ceramic or thermoplastic. In various embodiments, each septum 320 is formed of an open mesh fabric woven from monofilament fibers. The fibers may comprise glass, carbon, ceramic or polymers. By way of example, the fibers comprise monofilament polymer fibers made from one or more of polyamide, polyester, polyethylene chlorotrifluoroethylene (ECTFE), ethylene tetrafluoroethylene (ETFE), polytetrafluoroethyloene (PTFE), polyphenylene sulfide (PPS), polyfluoroethylene propylene (FEP), polyether ether ketone (PEEK), polyamide 9 (Nylon, 9 PA6) and polyamide 12 (Nylon 12, PA12).

As mentioned above, the septum 320 may be formed from a woven cloth or mesh. Suitable materials for the woven cloth or mesh include stainless steel, aluminum and titanium or mixtures thereof. The woven cloth or mesh may also be made of non-metallic materials, such as those described above. A stainless steel woven material is strong, light weight and has desirable sound attenuation characteristics. As also mentioned above, the septum 320 may be bonded to the core structure 310 using an adhesive. Exemplary adhesives include low solvent solution sprayable adhesives, adhesive films, epoxies, acrylics, phenolics, cyanoacrylates, bismaleimides, polyamine-imides and polyimides.

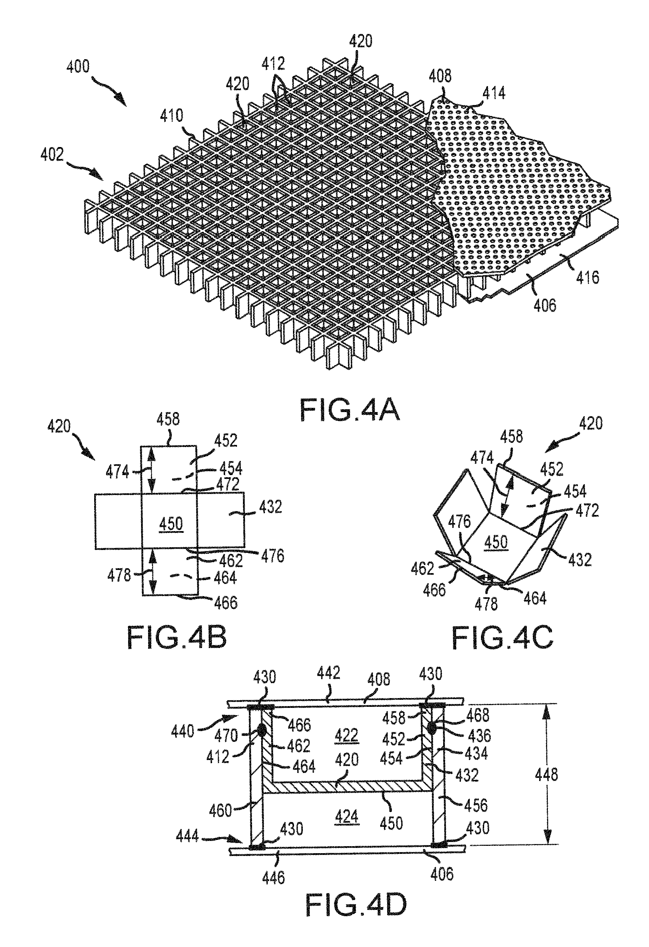

Referring now to FIGS. 4A-4D, a noise suppression system 400 and various of its component parts are illustrated. Similar to the noise suppression system 300 described above with reference to FIG. 3, the noise suppression system 400 includes an acoustic panel 402 having an outer layer 406 (also referred to as a back-skin 416), an inner layer 408 (also referred to as a perforated layer 414) and a core structure 410, comprising a plurality of cells 412 illustrated having square cross-sectional shapes. A septum 420 is disposed within each of the plurality of cells 412 and may exhibit the same cross sectional shape as does the corresponding cell. Referring briefly to FIG. 4D, the septum 420 divides each of the plurality of cells 412 into an inner cell 422 proximate the inner layer 408 and an outer cell 424 proximate the outer layer 406. In various embodiments, each septum 420 may be held in place by an adhesive, a weld or by friction. An adhesive 430, for example, adheres one or more tabs 432 of the septum 420 to one or more walls 434 of each cell, while a weld 436, which may, for example, be a spot weld or a tack weld, secures the one or more tabs 432 of the septum 420 to the one or more walls 434 of each cell. The adhesive 430 may also act to adhere each of the one or more tabs 432, the one or more walls 434 and the inner layer 408 together.

In various embodiments, each cell of the plurality of cells 412 defines a first cell end 440 configured for connection to a first layer 442 (*e.g.,* to the inner layer 408) and a second cell end 444 configured for connection to a second layer 446 (*e.g.,* to the outer layer 406). The first cell end 440 and the second cell end 444 define a cell length 448. The septum 420 includes a central portion 450 that is positioned within the cell at a location along the cell length 448, the location generally falling within a range of from about twenty-five percent (25%) to about seventy-five percent (75%) of the cell length 448 from the first cell end 440. In various embodiments, the septum 420 includes a first tab 452 extending from the central portion 450, the first tab 452 defining a first surface 454 configured for positioning against a first wall 456 of the cell and a first distal end 458 configured for positioning adjacent the first layer 442.

In various embodiments, each cell of the plurality of cells 412 includes a second wall 460 extending along the cell length 448 between the first cell end 440 and the second cell end 444 and the septum 420 includes a second tab 462 extending from the central portion 450. The second tab 462 includes a second surface 464 configured for positioning against the second wall 460 and a second distal end 466 configured for positioning adjacent the first layer 442. In various embodiments, the first tab 452 is secured to the first wall 456 by a first weld 468 and the second tab 462 is secured to the second wall 460 by a second weld 470. In various embodiments, the first distal end 458 of the first tab 452 and the second distal end 466 of the second tab 462 are secured to the first wall 456 and to the second wall 460, respectively, by the adhesive 430. In various embodiments, the first distal end 458 of the first tab 452 and the second distal end 466 of the second tab 462 are secured to the first wall 456 and to the second wall 460, respectively, and to the first layer 442, by the adhesive 430. In various embodiments, the first wall 456 and the second wall 460 are secured to the second layer 446 proximate the second cell end 444 by the adhesive 430.

Referring more specifically, the FIGS. 4B, 4C and 4D, in various embodiments, the first tab 452 defines a first proximal end 472 connected to the central portion 450 and a first tab length 474 extending from the first proximal end 472 to the first distal end 458. Similarly, in various embodiments, the second tab 462 defines a second proximal end 476 connected to the central portion 450 and a second tab length 478 extending from the second proximal end 476 to the second distal end 466. In various embodiments, the first tab length 474 is between about twenty-five percent (25%) and about seventy-five percent (75%) of the cell length 448, leading to the first proximal end 472 being positioned between about twenty-five percent (25%) and about seventy-five percent (75%) of the cell length 448. In various embodiments, the second tab length 478 is between about twenty-five percent (25%) and about seventy-five percent (75%) of the cell length 448, leading to the second proximal end 476 being positioned between about twenty-five percent (25%) and about seventy-five percent (75%) of the cell length 448.

In various embodiments, the first tab length 474 is equal to the second tab length 478, leading to the central portion 450 of the septum 420 being substantially perpendicular to the first wall 456 and to the second wall 460. In various embodiments, the first tab length 474 is not equal to the second tab length 478, leading to the central portion 450 of the septum 420 being substantially non-perpendicular to the first wall 456 and to the second wall 460. By selecting the tab lengths of the various tabs and positioning the respective distal ends of the tabs proximate the first end of the corresponding cell, the central portion of the septum may be accurately positioned within the cell at a desired location. Positioning the central portion 450 of the septum 420 at different depths along the cell length 448 facilitates acoustic tuning of the noise suppression system 400. In various embodiments, for example, positioning the central portion 450 proximate the inner layer 408 (*e.g.,* the perforated layer 414) provides for linear acoustic noise suppression while positioning the central portion 450 farther away from the inner layer 408 tends to provide for more DDOF performance. Further, selecting identical geometries for all septa enables the central portions of all septa to be positioned at the same axial location within each cell among a plurality of cells throughout a core structure, facilitating uniformity throughout the resulting acoustic panel.

As described further below, in various embodiments, the first tab 452 may be deformed or bent from a sheet of material forming the septum 420 at the first proximal end 472, such that a substantially right angle is formed between the first tab 452 and the central portion 450. Similarly, the second tab 462 may be deformed or bent from the sheet of material forming the septum 420 at the second proximal end 476, such that a substantially right angle is formed between the second tab 462 and the central portion 450. The deformed septum may then be inserted into the cell and welded or adhered as described above. Note that while the foregoing describes formation of the septum 420 having the first tab 452 and the second tab 462, the disclosure contemplates any number of tabs being constructed, formed and attached to cell walls in the same manner to provide for septa having various cross sectional shapes, such as, for example, square (*e.g.,* as illustrated in FIGS. 4B and 4C), triangular or n-pentagonal.

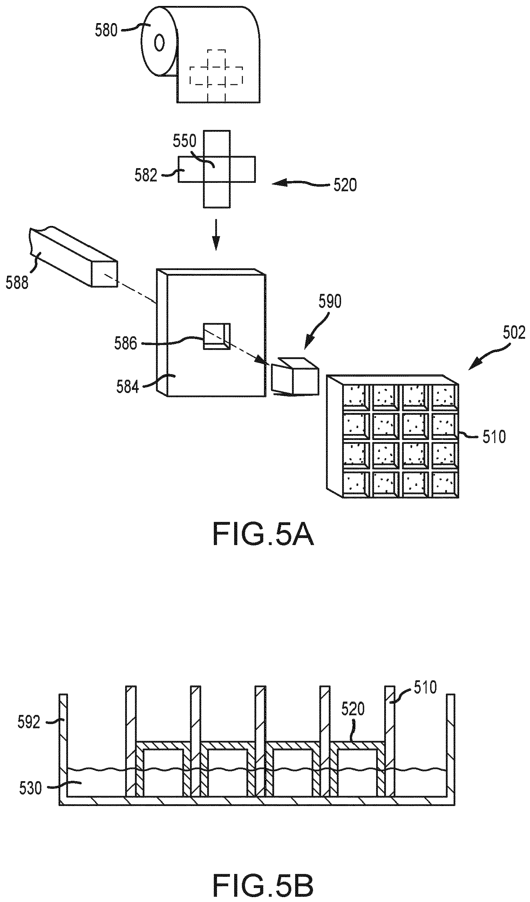

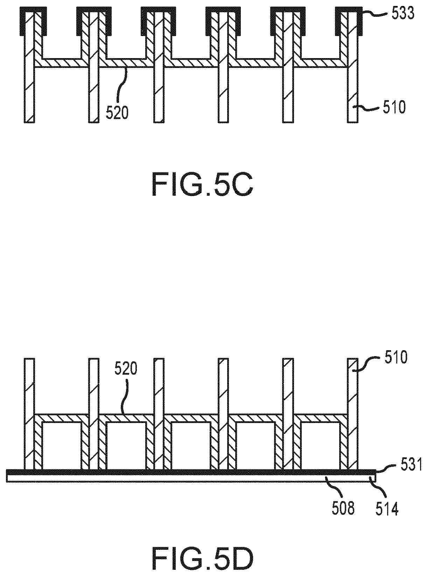

Referring now to FIGS. 5A, 5B, 5C and 5D, various processes for fabricating an acoustic panel 502 are described. In various embodiments, a septum 520 may be pre-cut (*e.g.,* die cut) from a roll of material 580. The septum 520 may include a plurality of tabs 582 extending from a central portion 550. For example, as illustrated in FIGS. 5A and 5B, the septum 520 may include four tabs, although any number of tabs greater than or equal to one is contemplated. The septum 520, in pre-cut form, may then be urged through a die 584 having an n-sided aperture 586, substantially in the shape of the central portion 550 of the septum 520. Urging the septum 520 in pre-cut form through the n-sided aperture 586 deforms or bends the plurality of tabs 582, such that the tabs are oriented at approximately right angles with respect to the central portion 550, although spring-back due to material elasticity may render the angles somewhat greater than right angles upon the septum exiting the die 584. In various embodiments, a punch 588 may be used to urge the septum 520 in pre-cut form through the die 584, resulting in the septum 520 taking on a deformed shape structure 590. The septum 520 having the deformed shape structure may then be inserted into a cell of a core structure 510 to form the acoustic panel 502. Once the septum 520 is inserted into the core structure 510 (or once a plurality of septa are inserted into the core structure 510), one or more of the tabs of the septum 520 may be welded to corresponding cell walls of the core structure.

Referring to FIG. 5B, following welding of the septum 520 (or septa) to the core structure 510, the assembly may be exposed to an adhesive. For example, in various embodiments, an adhesive 530 may be introduced into to a container 592. The assembly of septa positioned within the core structure 510 may then be dipped into the adhesive 530 to secure the distal ends of each septum to the walls of the core structure 510 proximate the first cell ends of each of the cells, as described above with reference to FIGS. 4B-4D. In various embodiments, the core structure 510 and septa having adhesive placed on the distal ends of the septa and the first cell ends or each of the cells may then be removed from the container 592 and placed against a first (or second) layer to form an adhered structure similar to that illustrated in FIG. 4D.

Referring now to FIG. 5C, in various embodiments, following welding of the septum 520 (or septa) to the core structure 510, the assembly may be overlaid with a layer or film of adhesive. The overlaid layer or film of adhesive is then air-blown, forcing the portions of the overlaid layer or film of adhesive in the center of each cell to be forced onto the sides of each of the septa, thereby forming a hat-like adhesive structure 533 that secures the distal ends of each of the septa to the walls of the core structure proximate the first ends of each of the cells. In various embodiments, the core structure 510 and septa having adhesive placed on the distal ends of the septa and the first cell ends or each of the cells may then be placed against a first (or second) layer to form an adhered structure similar to that illustrated in FIG. 4D. Referring now to FIG. 5D, in various embodiments, following welding of the septum 520 (or septa) to the core structure 510, the assembly may then be positioned on a first (or second) layer 508 (*e.g.,* a perforated layer 514), which layer comprises an adhesive layer 531 disposed thereon. The adhesive layer 531 secures the distal ends of each of the septa to the walls of the core structure proximate the first ends of each of the cells, together with the first (or second) layer 508, to form an adhered structure similar to that illustrated in FIG. 4D.

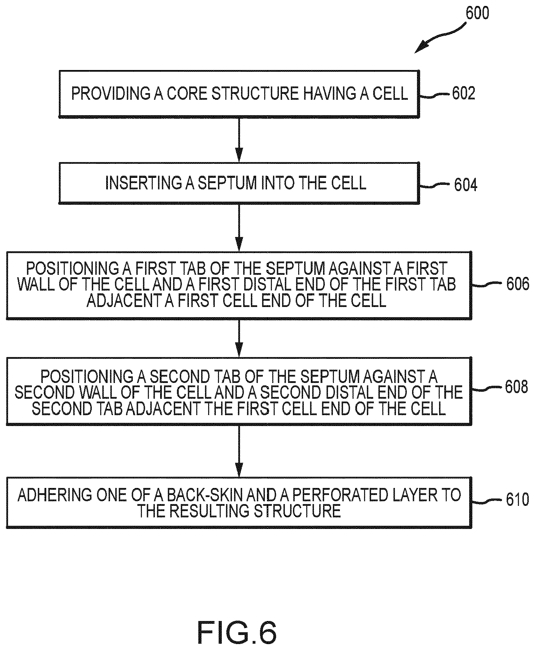

Referring now to FIG. 6, a method 600 of fabricating an acoustic panel may be summarized as follows, consistent with the foregoing description. In a first step 602, a core structure having a cell (or a plurality of cells) is provided, the cell having a first cell end and a second cell end spaced from the first cell end. In a second step 604, a septum is inserted into the cell, the septum having a central portion configured for positioning within the cell, a first tab extending from the central portion, and a second tab extending from the central portion. In a third step 606, the first tab is positioned against a first wall of the cell and a first distal end of the first tab is positioned adjacent the first cell end of the cell. Similarly, in a fourth step 608, the second tab is positioned against a second wall of the cell and a second distal end of the second tab is positioned adjacent the first cell end of the cell. In various embodiments, the third step 606 and the fourth step 608 are combined into a single step, which may include the positioning of any number of tabs against corresponding walls of the cell. In a fifth step 610, one of a back-skin and a perforated layer is adhered to the first distal end of the first tab, the second distal end of the second tab, the first wall proximate the first cell end of the cell and the second wall proximate the first cell end of the cell. In various embodiments, an additional step, which may occur prior to the adhering step, includes welding the first tab to the first wall and the second tab to the second wall. The various steps may be repeated for each cell within a composite core to fabricate the acoustic core having the structural and positional characteristics described above.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. An acoustic panel, comprising:
a first layer;
a cell having a first cell end connected to the first layer and a second cell end spaced a cell length from the first cell end, the cell having a first wall extending between the first cell end and the second cell end; and
a septum having a central portion positioned within the cell and a first tab extending from the central portion, the first tab defining a first surface positioned against the first wall and a first distal end positioned adjacent the first layer.

2. The acoustic panel of claim 1, wherein the cell includes a second wall extending between the first cell end and the second cell end and the septum includes a second tab extending from the central portion.

3. The acoustic panel of claim 2, wherein the second tab includes a second surface positioned against the second wall.

4. The acoustic panel of claim 3, wherein the second tab includes a second distal end positioned adjacent the first layer.

5. The acoustic panel of claim 4, wherein the first distal end of the first tab and the second distal end of the second tab are secured to the first layer by an adhesive.

6. The acoustic panel of claim 5, wherein the first tab is secured to the first wall by a first weld and the second tab is secured to the second wall by a second weld.

7. The acoustic panel of claim 6, wherein the septum comprises a mesh.

8. The acoustic panel of claim 7, wherein the mesh comprises stainless steel.

9. The acoustic panel of any preceding claim, wherein the first tab defines a first proximal end connected to the central portion and a first tab length extending from the first proximal end to the first distal end.

10. The acoustic panel of claim 9, wherein the first tab length is between about twenty-five percent and about seventy-five percent of the cell length.

11. The acoustic panel of claim 10, wherein the cell defines a cell cross-sectional shape in a form of a polygon, wherein the polygon is one of a triangle, a square and a hexagon, wherein the cell includes a second wall extending between the first cell end and the second cell end and the septum includes a second tab extending from the central portion, wherein the second tab defines a second proximal end connected to the central portion, a second distal end positioned adjacent the first layer, and a second tab length extending from the second proximal end to the second distal end, the second tab length equal to the first tab length, wherein the first distal end of the first tab and the second distal end of the second tab are secured to the first layer by an adhesive, wherein the first tab is secured to the first wall by a first weld and the second tab is secured to the second wall by a second weld.

12. A septum for an acoustic panel, comprising:
a central portion configured for positioning within a cell;
a first tab extending from the central portion, the first tab defining a first surface configured for positioning against a first wall of the cell and a first distal end configured for positioning adjacent a first layer of the acoustic panel; and
a second tab extending from the central portion, the second tab defining a second surface configured for positioning against a second wall of the cell and a second distal end configured for positioning adjacent the first layer of the acoustic panel.

13. The septum of claim 12, wherein the cell defines a cell cross-sectional shape in a form of one of a triangle, a square and a hexagon.

14. A method of fabricating an acoustic panel, comprising:
providing a core structure having a cell, the cell having a first cell end and a second cell end spaced from the first cell end;
inserting a septum into the cell, the septum having
a central portion configured for positioning within the cell,
a first tab extending from the central portion, and
a second tab extending from the central portion;
positioning the first tab against a first wall of the cell and a first distal end of the first tab adjacent the first cell end of the cell;
positioning the second tab against a second wall of the cell and a second distal end of the second tab adjacent the first cell end of the cell; and
adhering one of a back-skin and a perforated layer to the first distal end of the first tab, the second distal end of the second tab, the first wall proximate the first cell end of the cell and the second wall proximate the first cell end of the cell.

15. The method of claim 14, further comprising welding the first tab to the first wall and the second tab to the second wall.
